# EUROPEAN PATENT APPLICATION

(11) **EP 4 738 558 A1**
(43) Date of publication of application: **06.05.2026**
(21) Application number: 25211841.9
(22) Date of filing: 28.10.2025
(51) Int. Cl.: H01M 50/179, H01M 50/184, H01M 50/186, H01M 50/538, H01M 50/567

(54) **SECONDARY BATTERY**

(30) Priority: 28.10.2024 KR 20240148806
(71) Applicant: SK On Co., Ltd., Seoul 03161 (KR)
(72) Inventor: KWAK, Seung Ho, 34124 Daejeon (KR); PARK, Soo Min, 34124 Daejeon (KR); PARK, Jae Yun, 34124 Daejeon (KR); LEE, Joo Hyuk, 34124 Daejeon (KR); CHO, Myeong Shin, 34124 Daejeon (KR); PARK, Jung Nam, 13558 Seongnam-si (KR)
(74) Representative: Stolmár & Partner Patentanwälte PartG mbB

(57) **Abstract**

Provided is a secondary battery. According to one aspect of the present disclosure, the secondary battery comprises an electrode assembly accommodated inside a can, a current collector electrically connected to an electrode tab of the electrode assembly, and a rivet fastened to the current collector and functioning as an electrode terminal, wherein the current collector comprises a first coupling sleeve, the rivet comprises a second coupling sleeve fastened to the first coupling sleeve, and the first coupling sleeve is provided to be inserted into and fastened to the second coupling sleeve in a direction corresponding to a central axis of the electrode assembly.

## Description

### TECHNICAL FIELD

Embodiments of the present disclosure relate a secondary battery.

### BACKGROUND

A secondary battery is one of the energy storage means which can be charged and discharged through electrochemical reactions. The secondary battery is used in various fields using electrical energy. For example, the secondary battery is widely used in the field of mobile devices such as mobile phones, notebooks, and tablets, and broader use is being explored in the field of transportation means such as vehicles, aircraft, and ships. In addition, demand for secondary batteries is increasing in the field of energy storage systems (ESSs) for utilizing surplus power.

Secondary batteries can be classified into pouch-types, prismatic-types, cylindrical-types, coin-types, and the like depending on their packaging form. Among them, cylindrical secondary batteries have the advantages of standardized sizes and ease of mass production, and thus recently, demand therefor in the field of vehicles and the like has been rapidly increasing. Cylindrical secondary batteries may have a structure in which a jelly-roll type electrode assembly is accommodated in a can along with an electrolyte. In addition, the electrode assembly may be provided in a form in which a positive electrode and a negative electrode, disposed with a separator interposed therebetween, are wound in a roll shape.

### SUMMARY

Some embodiments of the present disclosure are directed to providing a secondary battery.

Some embodiments of the present disclosure are also directed to providing an appropriate coupling structure of a current collector and a rivet in a cylindrical secondary battery.

Some embodiments of the present disclosure are also directed to improving the assembly convenience of a current collector and a rivet.

Some embodiments of the present disclosure are also directed to implementing an appropriate electrical connection between a current collector and a rivet.

Some embodiments of the present disclosure may be widely applied in the field of green technology such as an electric vehicle, a battery charging station, solar power generation, and wind power generation utilizing batteries. In addition, some embodiments of the present disclosure may be used in an eco-friendly electric vehicle (EV), a hybrid vehicle, and the like to prevent climate change by suppressing air pollution and greenhouse gas emissions.

According to an aspect of the present disclosure, there is provided a secondary battery comprising an electrode assembly accommodated inside a can, a current collector electrically connected to an electrode tab of the electrode assembly, and a rivet fastened to the current collector and functioning as an electrode terminal, wherein the current collector comprises a first coupling sleeve, the rivet comprises a second coupling sleeve fastened to the first coupling sleeve, and the first coupling sleeve is provided to be inserted into and fastened to the second coupling sleeve in a direction corresponding to a central axis of the electrode assembly.

In some embodiments, the first coupling sleeve may be inserted into an inner space of the second coupling sleeve and fastened, and the second coupling sleeve may comprise an inner surface fastened in close contact with an outer surface of the first coupling sleeve.

In some embodiments, the first coupling sleeve may interlock with the second coupling sleeve to restrict separation in a direction of the central axis.

In some embodiments, the first coupling sleeve may comprise a first fixing protrusion, the second coupling sleeve may comprise a fixing groove fastened to the first fixing protrusion, and the fixing groove may be provided to restrict separation of the first fixing protrusion in a direction of the central axis.

In some embodiments, the first coupling sleeve may be formed of an elastic material having electrical conductivity and provided to be elastically in close contact with the second coupling sleeve.

In some embodiments, the first coupling sleeve may be provided to be at least partially bonded to the second coupling sleeve by an electrically conductive adhesive.

In some embodiments, the second coupling sleeve may comprise a first chamfer at one end portion through which the first coupling sleeve enters an inner space.

In some embodiments, the secondary battery may further comprise a gasket fastened between the can and the rivet.

In some embodiments, the gasket may comprise a first gasket disposed on the inside of the can and a second gasket disposed on the outside of the can and fastened to the first gasket.

In some embodiments, the first gasket may be provided with a first gasket coupling portion extending in a direction toward the inside and outside of the can, and the second gasket may be provided with a second gasket coupling portion having a shape corresponding to the first gasket coupling portion and fastened to the first gasket coupling portion.

In some embodiments, the gasket may be provided with an upper surface portion in close contact with the rivet on the outside of the can, and the first coupling sleeve may be fastened to the second coupling sleeve at a predetermined distance above the upper surface portion.

In some embodiments, the rivet may comprise a separation preventing protrusion that radially restrains and supports the first coupling sleeve between the rivet and the second coupling sleeve.

In some embodiments, the separation preventing protrusion may be formed to be spaced a predetermined interval apart from an inner surface of the second coupling sleeve, and an outer surface may be in close contact with an inner surface of the first coupling sleeve to restrain and support the first coupling sleeve in a region comprising an upper end portion of the first coupling sleeve.

In some embodiments, the separation preventing protrusion may be provided with a second chamfer at one end portion through which the first coupling sleeve enters between the separation preventing protrusion and the second coupling sleeve.

In some embodiments, the separation preventing protrusion may extend in a direction corresponding to the central axis and is provided such that one end portion supports a bottom surface of the current collector.

In some embodiments, the separation preventing protrusion may comprise a second fixing protrusion fastened to the bottom surface of the current collector, and the second fixing protrusion may comprise a third chamfer configured to guide insertion of the first coupling sleeve.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a schematic perspective view of a secondary battery according to one embodiment of the present disclosure;
FIG. 2 is a schematic cross-sectional view of the secondary battery illustrated in FIG. 1;
FIG. 3 is a schematic perspective view of an electrode assembly illustrated in FIG. 2;
FIG. 4 is a partially enlarged view of a current collector and a rivet illustrated in FIG. 2;
FIG. 5 is an exploded view illustrating the state in which the current collector and the rivet illustrated in FIG. 2 are separated;
FIG. 6 is a schematic operational view illustrating a method of assembling the current collector and the rivet illustrated in FIG. 5;
FIG. 7 is a schematic cross-sectional view illustrating another embodiment of the rivet illustrated in FIG. 4; and
FIG. 8 is a schematic cross-sectional view illustrating still another embodiment of the rivet illustrated in FIG. 4.

### DETAILED DESCRIPTION OF EXEMPLARY EMBODIMENTS

Hereinafter, the present disclosure will be described in detail with reference to the accompanying drawings. However, this is merely exemplary, and the present disclosure is not limited to the exemplified specific embodiments.

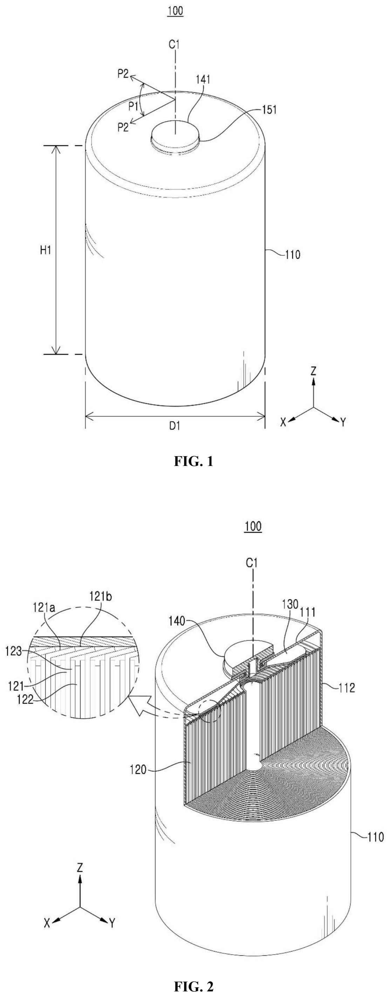

FIG. 1 is a schematic perspective view of a secondary battery according to one embodiment of the present disclosure.

For convenience, hereinafter, based on the coordinate axes illustrated in FIG. 1, an X-axis direction is referred to as a left-right direction, a Y-axis direction as a front-rear direction, and a Z-axis direction as an up-down direction. In addition, a rotational direction P1 about a central axis C1 illustrated in FIG. 1 is referred to as a circumferential direction, and an outward direction P2 from the central axis C1 is referred to as a radial direction.

Referring to FIG. 1, in some embodiments, a secondary battery 100 may be provided in a cylindrical shape having a predetermined diameter D1 and height H1. For example, the secondary battery 100 may have a diameter of 46 mm and a height of 80 mm. In some cases, the secondary battery 100 having such a form factor may be referred to as a '4680 battery.' In another example, the secondary battery 100 may have a diameter of 46 mm and a height of 80 mm, a diameter of 46 mm and a height of 95 mm, or a diameter of 46 mm and a height of 110 mm. In some cases, the secondary battery 100 having such a form factor may be referred to as a '46xx battery.' In the '46xx', 'xx' may represent the height of the form factor. In another example, the secondary battery 100 may have a diameter of 48 mm and a height of 75 mm, a diameter of 48 mm and a height of 80 mm, or a diameter of 48 mm and a height of 110 mm. In some cases, the secondary battery 100 having such a form factor may be referred to as a '48xx battery.' In the '48xx', 'xx' may represent the height of the form factor. However, in the present disclosure, the diameter D1 and the height H1 of the secondary battery 100 may vary and are not necessarily limited to the above examples.

Meanwhile, although the cylindrical secondary battery 100 is exemplified in the present description, the form factor of the secondary battery 100 according to the embodiments of the present disclosure is not necessarily limited to the exemplified form factors. The secondary battery 100 according to the embodiments of the present disclosure may be implemented or applied in the form of a coin-type, prismatic-type, pouch-type, or other non-standardized types within the scope of the technical spirit described below.

Meanwhile, in the illustrated embodiment, the cylindrical secondary battery 100 may comprise a central axis C1. The central axis C1 may be provided as an axis vertically passing through the center of the secondary battery 100. As described above, in this description, the circumferential direction and the radial direction are defined and referred to based on the central axis C1.

FIG. 2 is a schematic cross-sectional view of the secondary battery illustrated in FIG. 1.

Referring to FIG. 2, in some embodiments, the secondary battery 100 may comprise an electrode assembly 120 accommodated inside a can 110, a current collector 130 electrically connected to an electrode tab 121a of the electrode assembly 120, and a rivet 140 fastened to the current collector 130 and functioning as an electrode terminal. Here, the current collector 130 may comprise a first coupling sleeve 131, the rivet 140 may comprise a second coupling sleeve 141 fastened to the first coupling sleeve 131, and the first coupling sleeve 131 may be provided to be inserted into and fastened to the second coupling sleeve 141 in a direction corresponding to the central axis C1 of the electrode assembly 120.

Specifically, in some embodiments, the secondary battery 100 may comprise the can 110. The can 110 may form an overall exterior of the secondary battery 100. In addition, the can 110 may provide an internal space for accommodating the electrode assembly 120.

In some embodiments, the can 110 may be provided in a cylindrical shape having a predetermined diameter D1 and height H1. In addition, the cylindrical can 110 may comprise an upper surface 111 and a side surface 112. The upper surface 111 may be provided with the rivet 140, and the rivet 140 may function as one electrode terminal. For example, the rivet 140 may function as a positive electrode terminal or a negative electrode terminal. The remaining region of the upper surface 111, excluding the rivet 140, may function as the other electrode terminal. For example, the remaining region may function as a negative electrode terminal or a positive electrode terminal corresponding to the rivet 140. For convenience of description, the rivet 140 is assumed to be a positive electrode terminal, and the remaining region is assumed to be a negative electrode terminal.

Although not illustrated, in some embodiments, a lower end of the can 110 may be provided with an opening. The opening may be used to assemble the electrode assembly 120 and the like into the can 110. The opening may be appropriately closed by a cap plate after the electrode assembly 120 and the like are assembled.

Meanwhile, in some embodiments, the secondary battery 100 may comprise the electrode assembly 120. The electrode assembly 120 may be disposed inside the can 110. In some embodiments, the electrode assembly 120 may comprise a first electrode 121 and a second electrode 122 disposed with a separator 123 interposed therebetween. The first electrode 121 may be a positive electrode or negative electrode, and the second electrode 122 may be a negative electrode or positive electrode corresponding to the first electrode 121. For convenience of description, the first electrode 121 is assumed to be a positive electrode, and the second electrode 122 is assumed to be a negative electrode.

In some embodiments, the first electrode 121 may comprise a positive electrode current collector and a positive electrode mixture layer. For example, the positive electrode current collector may comprise aluminum, stainless steel, nickel, titanium, or an alloy thereof. Meanwhile, the positive electrode mixture layer may be provided on at least one surface of the positive electrode current collector. The positive electrode mixture layer may comprise a positive electrode active material, and the positive electrode active material may comprise a compound capable of reversibly intercalating and deintercalating lithium ions. For example, the positive electrode active material may comprise a lithium-nickel metal oxide, and in some cases, the lithium-nickel metal oxide may further comprise cobalt, manganese, or aluminum.

In some embodiments, the second electrode 122 may comprise a negative electrode current collector and a negative electrode mixture layer. For example, the negative electrode current collector may comprise copper, stainless steel, nickel, titanium, or an alloy thereof. Meanwhile, the negative electrode mixture layer may be provided on at least one surface of the negative electrode current collector. The negative electrode mixture layer may comprise a negative electrode active material, and the negative electrode active material may comprise a compound capable of reversibly intercalating and deintercalating lithium ions. For example, the negative electrode active material may comprise a carbon-based material such as crystalline carbon, amorphous carbon, carbon composites, carbon fibers, or other carbon-based materials. Alternatively, the negative electrode active material may comprise lithium metal, a lithium alloy, a silicon-containing material, or a tin-containing material.

The separator 123 may be provided between the first electrode 121 and the second electrode 122. The separator 123 may be provided to restrict an electrical short-circuit between the first electrode 121 and the second electrode 122 and to allow ions to flow. In some embodiments, the separator 123 may comprise a porous polymer film, a porous nonwoven fabric, or the like. For example, the porous polymer film may comprise a polyolefin-based polymer such as an ethylene polymer, a propylene polymer, an ethylene/butene copolymer, an ethylene/hexene copolymer, or an ethylene/methacrylate copolymer. In addition, the porous nonwoven fabric may comprise high-melting-point glass fibers or polyethylene terephthalate fibers.

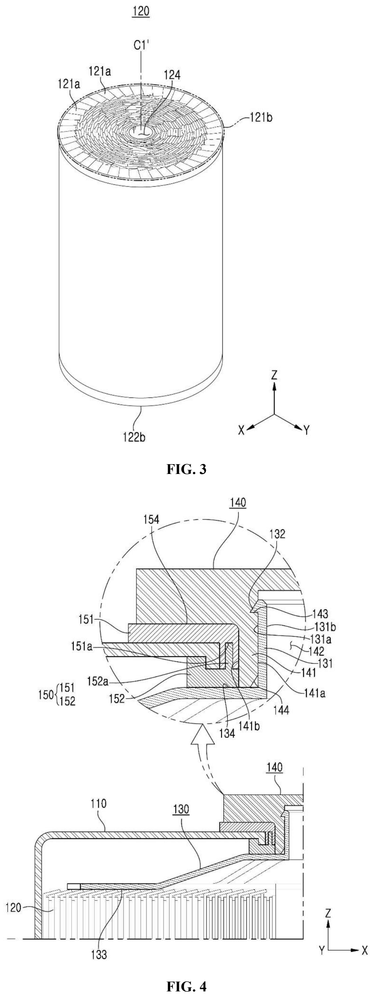

FIG. 3 is a schematic perspective view of the electrode assembly illustrated in FIG. 2.

Referring to FIG. 3, in some embodiments, the electrode assembly 120 may be provided in a cylindrical roll form in which the first electrode 121, the second electrode 122, and the separator 123 are wound around the central axis C1. Such a roll-type electrode assembly 120 may be referred to in the art as a jelly roll.

In some embodiments, a hollow 124 may be provided at the center of the electrode assembly 120. The hollow 124 may be provided as a predetermined space formed at the center of the electrode assembly 120 during a winding process of the electrode assembly 120. In some embodiments, the hollow 124 may be used for injection of an electrolyte, collection of gas inside the can 110, or the like. Meanwhile, the electrode assembly 120 may comprise a central axis C1' disposed corresponding to the hollow 124. In the illustrated embodiment, the central axis C1' of the electrode assembly 120 corresponds to the central axis C1 of the secondary battery 100. Accordingly, for convenience of description, the central axis C1' of the electrode assembly 120 and the central axis C1 of the secondary battery 100 are collectively referred to as "the central axis C1."

Meanwhile, in some embodiments, the electrode assembly 120 may comprise a first electrode tab 121a. The first electrode tab 121a may be provided at one end portion of the positive electrode current collector in which the positive electrode mixture layer is omitted. In the illustrated embodiment, the first electrode tab 121a is provided at an upper end portion of the first electrode 121. In some embodiments, a plurality of first electrode tabs 121a may be provided. The plurality of first electrode tabs 121a may be disposed in a winding direction of the first electrode 121 at the upper end portion of the first electrode 121. In addition, the plurality of first electrode tabs 121a may be bent toward the central axis C1. The plurality of bent first electrode tabs 121a may form a first bonding surface 121b at an upper end of the electrode assembly 120. The first bonding surface 121b may be provided as a schematic surface formed by the plurality of bent first electrode tabs 121a.

Similar to the first electrode tab 121a described above, in some embodiments, the electrode assembly 120 may comprise a second electrode tab. The second electrode tab may be disposed at one end portion of the negative electrode current collector in which the negative electrode mixture layer is omitted. In the illustrated embodiment, the second electrode tab is provided at a lower end portion of the second electrode 122. Although not illustrated, in some embodiments, a plurality of second electrode tabs may be provided, and the plurality of second electrode tabs may be disposed in a winding direction of the second electrode 122 at the lower end portion of the second electrode 122. In addition, the plurality of second electrode tabs may be bent toward the central axis C1, and the plurality of bent second electrode tabs may form a second bonding surface 122b at a lower end of the electrode assembly 120. The second bonding surface 122b may be provided as a schematic surface formed by the plurality of bent second electrode tabs.

Referring again to FIG. 2, in some embodiments, the secondary battery 100 may comprise the current collector 130. The current collector 130 may be electrically connected to the first electrode tab 121a or the second electrode tab and thus electrically connected to the first electrode 121 or the second electrode 122. In the illustrated embodiment, the current collector 130 is disposed on an upper end of the electrode assembly 120 and electrically connected to the first electrode tab 121a. The configuration of the current collector 130 will be described in detail with reference to FIG. 4.

Meanwhile, in some embodiments, the secondary battery 100 may comprise the rivet 140. The rivet 140 may be provided on the upper surface 111 of the can 110. In addition, the rivet 140 may be fastened to the current collector 130 and may function as one electrode terminal. In the illustrated embodiment, the current collector 130 is electrically connected to the first electrode tab 121a corresponding to a positive electrode, and the rivet 140 is fastened to the current collector 130 and may function as a positive electrode terminal. The configuration of the rivet 140 will be described in detail with reference to FIG. 4.

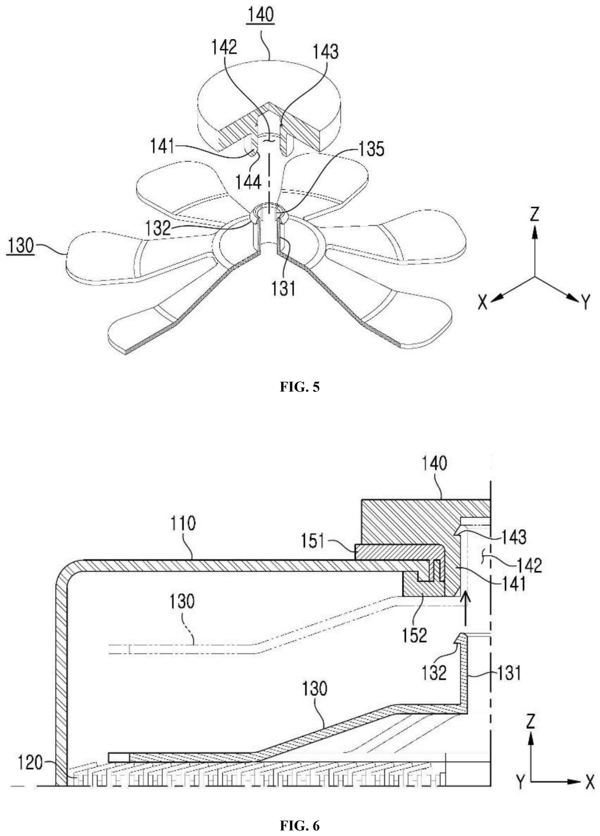

FIG. 4 is a partially enlarged view of the current collector and the rivet illustrated in FIG. 2. FIG. 5 is an exploded view illustrating the state in which the current collector and the rivet illustrated in FIG. 2 are separated.

Referring to FIGS. 4 and 5, in some embodiments, the current collector 130 may comprise the first coupling sleeve 131. The first coupling sleeve 131 may be integrally provided in the current collector 130. In other words, the first coupling sleeve 131 may be provided as a partial region of the current collector 130. In the illustrated embodiment, the first coupling sleeve 131 may be provided in the form of a circular sleeve extending a predetermined length upward from a central portion of the current collector 130a. The first coupling sleeve 131 may comprise an inner surface 131a and an outer surface 131b, each extending in a circumferential direction. The first coupling sleeve 131 may have a predetermined thickness between the inner surface 131a and the outer surface 131b.

In addition, in some embodiments, the rivet 140 may comprise the second coupling sleeve 141. The second coupling sleeve 141 may be integrally provided in the rivet 140. In other words, the second coupling sleeve 141 may be provided as a partial region of the rivet 140. In the illustrated embodiment, the second coupling sleeve 141 may be formed to extend in the form of a circular sleeve while surrounding an inner space 142 disposed at the center of a bottom surface of the rivet 140 in a circumferential direction. The second coupling sleeve 141 may comprise an inner surface 141a and an outer surface 141b, each extending in the circumferential direction. In addition, the second coupling sleeve 141 may have a predetermined thickness between the inner surface 141a and the outer surface 141b.

In some embodiments, the first coupling sleeve 131 may be inserted into the inner space 142 of the second coupling sleeve 141 as described above and fastened. Specifically, the first coupling sleeve 131 may be inserted into the inner space 142 and fastened such that the outer surface 131b faces the inner surface 141a of the second coupling sleeve 141. In addition, the outer surface 131b of the inserted and fastened first coupling sleeve 131 may be in close contact with the inner surface 141a of the second coupling sleeve 141. As a result, the current collector 130 and the rivet 140 may be mutually coupled and electrically connected.

In some embodiments, the first coupling sleeve 131 may be provided to be inserted into and fastened to the second coupling sleeve 141 in a direction corresponding to the central axis C1. That is, the first coupling sleeve 131 may be moved toward the second coupling sleeve 141 in a direction parallel to the central axis C1 or the Z-axis and may be provided to be inserted into and fastened to the second coupling sleeve 141. For example, in the illustrated embodiment, the first coupling sleeve 131 is moved upward in parallel with the central axis C1 toward the second coupling sleeve 141 and is provided to be inserted into and fastened to the second coupling sleeve 141. Such an assembling structure of the first coupling sleeve 131 allows coupling and electrical connection between the current collector 130 and the rivet 140 to be implemented together in a process of inserting and fastening the electrode assembly 120 into the can 110. Accordingly, the assembling of the secondary battery 100 may be simplified. This will be described in more detail with reference to FIG. 6.

Meanwhile, in some embodiments, the first coupling sleeve 131 may interlock with the second coupling sleeve 141 to restrict the separation in a direction of the central axis C1. That is, in the illustrated embodiment, the first coupling sleeve 131 interlocks with the second coupling sleeve 141, and thus the separation in the downward direction is restricted. Accordingly, the current collector 130 may maintain appropriate coupling with the rivet 140.

Specifically, in some embodiments, an upper end of the first coupling sleeve 131 may be provided with a first fixing protrusion 132. In addition, the inner surface 141a of the second coupling sleeve 141 may be provided with a fixing groove 143. The fixing groove 143 may be disposed at an appropriate height on the inner surface 141a of the second coupling sleeve 141 in consideration of the assembling position of the first coupling sleeve 131. In addition, the first fixing protrusion 132 may interlock with the fixing groove 143. Accordingly, the first fixing protrusion 132 and the first coupling sleeve 131 may be appropriately restricted from the separation in the direction of the central axis C1. That is, the first fixing protrusion 132 and the first coupling sleeve 131 interlock with the fixing groove 143, and thus the separation in the downward direction is appropriately restricted.

Meanwhile, in some embodiments, the first coupling sleeve 131 may be formed of an elastic material having electrical conductivity. For example, the first coupling sleeve 131 may be formed of a metal material such as copper, aluminum, or stainless steel. Accordingly, the first coupling sleeve 131 may be elastically deformed to some extent during a coupling process with the second coupling sleeve 141. For example, the first coupling sleeve 131 may be elastically deformed to some extent in the process of being inserted into the inner space 142 of the second coupling sleeve 141. In addition, when the coupling of the first coupling sleeve 131 with the second coupling sleeve 141 is completed, the first coupling sleeve 131 may be elastically in close contact with the second coupling sleeve 141. For example, when the first fixing protrusion 132 of the first coupling sleeve 131 is aligned with the fixing groove 143, the outer surface 131b of the first coupling sleeve 131 may be elastically in close contact with the inner surface 141a of the second coupling sleeve 141. Accordingly, the first coupling sleeve 131 may maintain appropriate coupling with the second coupling sleeve 141. In other words, the current collector 130 may maintain appropriate coupling with the rivet 140.

In some embodiments, an electrically conductive adhesive may be applied between the first coupling sleeve 131 and the second coupling sleeve 141. In other words, the first coupling sleeve 131 may be partially or entirely bonded to the second coupling sleeve 141 by the electrically conductive adhesive. The adhesive may be applied over part or all of the region between the outer surface 131b of the first coupling sleeve 131 and the inner surface 141a of the second coupling sleeve 141. The adhesive assists in more firmly maintaining the coupling between the first and second coupling sleeves 131 and 141.

Meanwhile, in some embodiments, an end portion of the second coupling sleeve 141 may be provided with a first chamfer 144. The first chamfer 144 may be provided at one end portion of the second coupling sleeve 141 through which the first coupling sleeve 131 enters. In the illustrated embodiment, the first chamfer 144 is provided at a lower end of the second coupling sleeve 141. The first chamfer 144 may be provided such that a lower end edge portion of the second coupling sleeve 141 surrounding the inner space 142 is extended to be inclined to some extent. That is, the first chamfer 144 may be provided as an inclined surface. The first chamfer 144 may function to guide the insertion of the first coupling sleeve 131 when the first and second coupling sleeves 131 and 141 are coupled.

Meanwhile, in some embodiments, an upper region of the first coupling sleeve 131 may be provided with a slit 135. The slit 135 may assist elastic deformation of the first coupling sleeve 131 to induce smooth coupling between the first and second coupling sleeves 131 and 141. The slit 135 may be formed by being recessed downward from the upper end of the first coupling sleeve 131 to a predetermined depth. In addition, a plurality of slits 135 may be provided, and the plurality of slits 135 may be spaced apart from each other in a circumferential direction along an upper rim of the first coupling sleeve 131.

Meanwhile, in some embodiments, the current collector 130 may comprise a third bonding surface 133 electrically connected to the electrode assembly 120. The third bonding surface 133 may be provided as a partial region of a bottom surface of the current collector 130. In addition, the third bonding surface 133 may be bonded to the first bonding surface 121b or the second bonding surface 122b of the electrode assembly 120, thereby electrically connecting the current collector 130 to the first electrode 121 or the second electrode 122. For example, in the illustrated embodiment, the third bonding surface 133 is bonded to the first bonding surface 121b, thereby electrically connecting the current collector 130 to the first electrode 121. In some embodiments, the third bonding surface 133 may be bonded to the electrode assembly 120 by welding.

Meanwhile, in some embodiments, the current collector 130 may comprise a sealing surface 134. In the illustrated embodiment, the sealing surface 134 is provided in a central region of the current collector 130, and the first coupling sleeve 131 protrudes upward from the sealing surface 134. The sealing surface 134 may function to seal the inside of the can 110 by being in close contact with a gasket 150 to be described below.

Meanwhile, in some embodiments, the secondary battery 100 may further comprise the gasket 150. The gasket 150 is fastened between the can 110 and the rivet 140 and may function to seal the inside of the can 110. Specifically, a bottom surface portion of the gasket 150 facing the inside of the can 110 may be in close contact with the sealing surface 134 of the current collector 130, and a side portion of the gasket 150 facing the central axis C1 may be in close contact with the outer surface 141b of the rivet 140. Accordingly, the inside of the can 110 may be appropriately sealed from the outside.

In some embodiments, the gasket 150 may be divided into a plurality of pieces. The divided gasket 150 may contribute to improving the assemblability into the can 110. Specifically, the gasket 150 may be divided into a first gasket 151 and a second gasket 152. The first gasket 151 may be disposed on the outside of the can 110, and the second gasket 152 may be disposed on the inside of the can 110. The first and second gaskets 151 and 152 may be coupled to each other with the can 110 interposed therebetween to form one gasket 150.

In some embodiments, the first gasket 151 may comprise a first gasket coupling portion 151a. The first gasket coupling portion 151a may be provided as a partial region of the first gasket 151 that is coupled to the second gasket 152. In the illustrated embodiment, the first gasket coupling portion 151a is illustrated as an inner circumferential partial region of the first gasket 151. Similarly, the second gasket 152 may comprise a second gasket coupling portion 152a. The second gasket coupling portion 152a may be provided as a partial region of the second gasket 152 that is coupled to the first gasket 151. In the illustrated embodiment, the second gasket coupling portion 152a is illustrated as an inner circumferential partial region of the second gasket 152.

The first and second gasket coupling portions 151a and 152a may be coupled to each other. Accordingly, the first and second gasket coupling portions 151a and 152a may form one gasket 150 sealing between the rivet 140 and the can 110. Here, the first and second gasket coupling portions 151a and 152a may be coupled to each other in a direction toward the inside and outside of the can 110. In other words, the first and second gasket coupling portions 151a and 152a may be assembled in the up-down direction.

Specifically, the first gasket coupling portion 151a may extend in a direction toward the inside and outside of the can 110. In the illustrated embodiment, the first gasket coupling portion 151a is illustrated as having a roughly groove shape, and the groove extends in the up-down direction. In addition, the second gasket coupling portion 152a may be formed in a shape corresponding to the first gasket coupling portion 151a. In the illustrated embodiment, the second gasket coupling portion 152a is illustrated in the form of a protrusion corresponding to the groove-shaped first gasket coupling portion 151a, and the protrusion extends vertically to correspond to the groove shape. The first and second gasket coupling portions 151a and 152a may be provided to be coupled to each other such that the groove and protrusion shapes interlock with each other.

The first and second gasket coupling portions 151a and 152a described above may be assembled to each other in a direction toward the inside and outside of the can 110. In other words, the first and second gaskets 151 and 152 may be vertically assembled on the inside and outside of the can 110, respectively. This may facilitate the assembly of the gasket 150 into the can 110. In addition, the first and second gasket coupling portions 151a and 152a described above may form a bonding surface 153 extending in the up-down direction. In other words, the first and second gasket coupling portions 151a and 152a may form the bonding surface 153 intersecting a lateral direction. The bonding surface 153 may contribute to improving the sealing force of the gasket 150. To elaborate, in some embodiments, the gasket 150 may be mainly supported according to the vertical coupling force between the rivet 140 and the current collector 130, and accordingly, the sealing force in the lateral direction may be supplemented through the bonding surface 153 as described above.

In addition, in some embodiments, the gasket 150 may comprise an upper surface portion 154 in close contact with the rivet 140 on the outside of the can 110. In the illustrated embodiment, the upper surface portion 154 corresponds to the upper surface portion 154 of the first gasket 151, and the upper surface portion 154 is in close contact with the bottom surface of the rivet 140. Meanwhile, the first gasket 151 may be disposed between the can 110 and the rivet 140 and may be pressed by the coupling force between the can 110 and the rivet 140. Accordingly, the first gasket 151 may seal the inside and outside of the can 110.

In the above, the first coupling sleeve 131 described above may be coupled to the second coupling sleeve 141 at a predetermined distance above the upper surface portion 154 of the gasket 150. In other words, the first coupling sleeve 131 may be coupled to the second coupling sleeve 141 by the first fixing protrusion 132 at an upper end thereof, and the first fixing protrusion 132 may be disposed at a predetermined distance above the upper surface portion 154. In such a case, the gasket 150 may be disposed between the upper first fixing protrusion 132 and the lower sealing surface 134, and may be more appropriately pressed and supported between the first fixing protrusion 132 and the sealing surface 134. In other words, the gasket 150 may be disposed between the upper and lower supporting surfaces and may be pressed and supported, and accordingly, the upper surface portion 154 of the gasket 150 may be pressed and supported in a more stable supporting state. This may contribute to securing an appropriate sealing force of the gasket 150.

FIG. 6 is a schematic operation view illustrating a method of assembling the current collector and the rivet illustrated in FIG. 5.

Hereinafter, a method of assembling the current collector 130 and the rivet 140 as described above will be schematically described. However, in the embodiments of the present disclosure, the method of assembling the current collector 130 and the rivet 140 is not necessarily limited to the assembling method to be described below. The current collector 130 and the rivet 140 may comprise the above-described components, but may also be assembled through a method different from that described below.

Referring to FIG. 6, the can 110 is prepared, and the gasket 150 may be assembled to the can 110. The gasket 150 may be divided into the first gasket 151 and the second gasket 152, and the first gasket 151 and the second gasket 152 may be disposed on the inside and outside of the can 110 and assembled in the up-down direction. Subsequently, the rivet 140 may be assembled. The rivet 140 may be assembled to the gasket 150 by inserting the second coupling sleeve 141 into the center of the gasket 150.

Subsequently, the current collector 130 may be coupled to the rivet 140. The current collector 130 may be pre-welded to the electrode assembly 120 and inserted into the can 110 together with the electrode assembly 120. The inserted current collector 130 may be coupled to the rivet 140 as the first coupling sleeve 131 is inserted into the inner space 142 of the second coupling sleeve 141. The first chamfer 144 may guide the insertion of the first coupling sleeve 131. When the current collector 130 is properly inserted, the first fixing protrusion 132 may be coupled to the fixing groove 143, thereby fixing the current collector 130. In addition, the current collector 130 may be electrically connected to the rivet 140 by the outer surface 131b coming into close contact with the inner surface 141a of the rivet 140.

In some embodiments, an electrically conductive adhesive may be further applied to a junction between the current collector 130 and the rivet 140 as described above. The adhesive may be appropriately applied to the outer surface 131b of the first coupling sleeve 131 and/or the inner surface 141a of the second coupling sleeve 141 before insertion of the current collector 130. The adhesive may assist the mechanical coupling between the first fixing protrusion 132 and the fixing groove 143 to more completely bond the rivet 140 and the current collector 130.

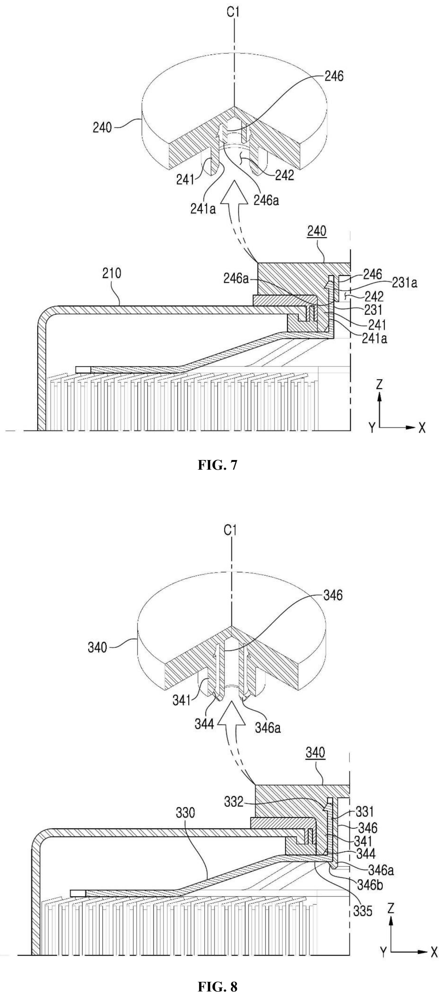

FIG. 7 is a schematic cross-sectional view illustrating another embodiment of the rivet illustrated in FIG. 4.

For convenience of explanation, the following description will focus on differences from the previously described embodiment.

Referring to FIG. 7, in some embodiments, a rivet 240 may further comprise a separation preventing protrusion 246. The separation preventing protrusion 246 may be provided to radially restrain and support a first coupling sleeve 231 between the separation preventing protrusion 246 and a second coupling sleeve 241. Accordingly, the coupling force between the first and second coupling sleeves 231 and 241 may be improved.

Specifically, the separation preventing protrusion 246 may protrude toward an inner space 242 from a bottom surface of the rivet 240. In the illustrated embodiment, the separation preventing protrusion 246 protrudes downward from the bottom surface of the rivet 240 to a position roughly corresponding to an upper surface of a can 210. In addition, the separation preventing protrusion 246 may extend in a circumferential direction centered on the central axis C1. In other words, the separation preventing protrusion 246 may planarly extend in the form of a circular ring to correspond to the first coupling sleeve 231. In addition, the separation preventing protrusion 246 may be spaced a predetermined interval apart from an inner surface 241a of the second coupling sleeve 241. That is, the separation preventing protrusion 246 may be spaced apart from the inner surface 241a of the second coupling sleeve 241 by a distance corresponding to a thickness of the first coupling sleeve 231. Accordingly, the first coupling sleeve 231 may be in close contact between the second coupling sleeve 241 and the separation preventing protrusion 246 in a thickness direction.

The separation preventing protrusion 246 described above may be in close contact with an inner surface 231a of the first coupling sleeve 231 and support the first coupling sleeve 231 from the inside. Specifically, as illustrated in the embodiment, the separation preventing protrusion 246 may be in close contact with the inner surface 231a of the first coupling sleeve 231 in a region comprising an upper end portion of the first coupling sleeve 231 and may restrain and support the first coupling sleeve 231. Accordingly, the first coupling sleeve 231 may be more firmly fixed to the rivet 240 at the upper end portion thereof. In addition, as illustrated in the embodiment, when the upper end portion of the first coupling sleeve 231 is coupled to the rivet 240, the separation preventing protrusion 246 may function to appropriately press a coupling portion of the first coupling sleeve 231 to maintain the coupling force.

Meanwhile, in some embodiments, one end portion of the separation preventing protrusion 246 may be provided with a second chamfer 246a. The second chamfer 246a may be provided at one end portion through which the first coupling sleeve 231 enters between the separation preventing protrusion 246 and the second coupling sleeve 241. In other words, in the illustrated embodiment, the second chamfer 246a may be provided at the lower end of the separation preventing protrusion 246. The second chamfer 246a may come into contact with an upper end of the first coupling sleeve 231 and may function to guide the assembling position of the first coupling sleeve 231.

FIG. 8 is a schematic cross-sectional view illustrating still another embodiment of the rivet illustrated in FIG. 4.

Referring to FIG. 8, in some embodiments, a separation preventing protrusion 346 may extend vertically to reach a bottom surface 335 of a current collector 330. Specifically, the separation preventing protrusion 346 may vertically extend corresponding to the central axis C1, and a lower end of the separation preventing protrusion 346 may reach the bottom surface 335 of the current collector 330. In addition, the lower end of the separation preventing protrusion 346 may be provided with a second fixing protrusion 346a, and the second fixing protrusion 346a may interlock with the bottom surface 335 of the current collector 330. Accordingly, the current collector 330 may be vertically restrained and supported by a first fixing protrusion 332 at an upper end and the second fixing protrusion 346a at the lower end.

Meanwhile, in some embodiments, the second fixing protrusion 346a may be provided with a third chamfer 346b. The third chamfer 346b may come into contact with an upper end of the first coupling sleeve 331 and may function to guide the assembling position of the first coupling sleeve 331. More specifically, as the current collector 330 and a rivet 340 are assembled, the assembly position of the first coupling sleeve 331 may be guided by coming into contact with the third chamfer 346b, and then guided by coming into contact with a first chamfer 344 provided in a second coupling sleeve 341. In other words, in an assembling start stage with the rivet 340, the first coupling sleeve 331 may be assembled to the rivet 340 while the assembly position is radially aligned outward and inward by the third chamfer 346b and the first chamfer 344, respectively. Accordingly, the assembling process between the current collector 330 and the rivet 340 may be performed more smoothly.

As described above, embodiments of the present disclosure may provide a secondary battery.

In some embodiments of the present disclosure, the current collector and the rivet may be assembled in a coupled manner. In other words, the current collector and the rivet may be mutually assembled through a mechanical coupling structure. Accordingly, a welding process may be omitted or minimized when coupling the current collector and the rivet.

In addition, in some embodiments of the present disclosure, the current collector and the rivet may be mutually coupled in a direction corresponding to the central axis. In other words, after the can and the rivet are prepared, and the current collector and the electrode assembly are prepared, the current collector and the electrode assembly may be inserted into the can in the direction corresponding to the central axis, and the current collector and the rivet may be mutually coupled. Such a coupling structure may contribute to improving assembly convenience. In addition, such a coupling structure may contribute to facilitating the construction of an automated assembly line.

In addition, in some embodiments of the present disclosure, an appropriate bonding structure of the current collector and the rivet may be implemented. The current collector and the rivet may have a sufficient bonding area and may be in close contact with each other, and accordingly, despite omission or minimization of a welding process, an appropriate electrical connection between the current collector and the rivet may be implemented.

Some embodiments of the present disclosure can provide a secondary battery.

In addition, some embodiments of the present disclosure can provide an appropriate coupling structure of a current collector and a rivet in a cylindrical secondary battery.

In addition, some embodiments of the present disclosure can improve the assembly convenience of a current collector and a rivet.

In addition, some embodiments of the present disclosure can implement an appropriate electrical connection between a current collector and a rivet.

Some of the aspects of the present disclosure are as follows:
Aspect 1: A secondary battery comprising: an electrode assembly 120 accommodated inside a can; a current collector 130 electrically connected to an electrode tab of the electrode assembly 120; and a rivet 140 fastened to the current collector 130 and functioning as an electrode terminal, wherein the current collector 130 comprises a first coupling sleeve 131, 231, 331, the rivet 140 comprises a second coupling sleeve 141, 241, 341 fastened to the first coupling sleeve 131, 231, 331, and the first coupling sleeve 131, 231, 331 is provided to be inserted into and fastened to the second coupling sleeve 141, 241, 341 in a direction corresponding to a central axis of the electrode assembly 120.
Aspect 2: The secondary battery of aspect 1, wherein the first coupling sleeve 131, 231, 331 is inserted into an inner space of the second coupling sleeve 141, 241, 341 and fastened, and the second coupling sleeve 141, 241, 341 comprises an inner surface fastened in close contact with an outer surface of the first coupling sleeve 131, 231, 331.
Aspect 3: The secondary battery according to any one of the preceding aspects, wherein the first coupling sleeve 131, 231, 331 interlocks with the second coupling sleeve 141, 241, 341 to restrict separation in a direction of the central axis.
Aspect 4: The secondary battery according to any one of the preceding aspects, wherein the first coupling sleeve 131, 231, 331 comprises a first fixing protrusion, the second coupling sleeve 141, 241, 341 comprises a fixing groove fastened to the first fixing protrusion, and the fixing groove is provided to restrict separation of the first fixing protrusion in a direction of the central axis.
Aspect 5: The secondary battery according to any one of the preceding aspects, wherein the first coupling sleeve 131, 231, 331 is formed of an elastic material having electrical conductivity and is provided to be elastically in close contact with the second coupling sleeve 141, 241, 341.
Aspect 6: The secondary battery according to any one of the preceding aspects, wherein the first coupling sleeve 131, 231, 331 is provided to be at least partially bonded to the second coupling sleeve 141, 241, 341 by an electrically conductive adhesive.
Aspect 7: The secondary battery according to any one of the preceding aspects, wherein the second coupling sleeve 141, 241, 341 comprises a first chamfer at one end portion through which the first coupling sleeve 131, 231, 331 enters an inner space.
Aspect 8: The secondary battery according to any one of the preceding aspects, further comprising a gasket 150 fastened between the can and the rivet 140.
Aspect 9: The secondary battery according to any one of the preceding aspects, wherein the gasket 150 comprises: a first gasket 151 disposed on an inside of the can; and a second gasket 152 disposed on an outside of the can and fastened to the first gasket.
Aspect 10: The secondary battery according to any one of the preceding aspects, wherein the first gasket 151 is provided with a first gasket coupling portion 151a extending in a direction toward the inside and outside of the can, and the second gasket 152 is provided with a second gasket coupling portion 152a having a shape corresponding to the first gasket coupling portion 151a and fastened to the first gasket coupling portion 151a.
Aspect 11: The secondary battery according to any one of the preceding aspects, wherein the gasket 151 is provided with an upper surface portion in close contact with the rivet 140 on an outside of the can, and the first coupling sleeve 131, 231, 331 is fastened to the second coupling sleeve 141, 241, 341 at a predetermined distance above the upper surface portion.
Aspect 12: The secondary battery according to any one of the preceding aspects, wherein the rivet 140 comprises a separation preventing protrusion that radially restrains and supports the first coupling sleeve 131, 231, 331 between the rivet and the second coupling sleeve 141, 241, 341.
Aspect 13: The secondary battery according to any one of the preceding aspects, wherein the separation preventing protrusion is formed to be spaced a predetermined interval apart from an inner surface of the second coupling sleeve 141, 241, 341, and an outer surface is in close contact with an inner surface of the first coupling sleeve 131, 231, 331 to restrain and support the first coupling sleeve 131, 231, 331 in a region comprising an upper end portion of the first coupling sleeve 131, 231, 331.
Aspect 14. The secondary battery according to any one of the preceding aspects, wherein the separation preventing protrusion is provided with a second chamfer at one end portion through which the first coupling sleeve 131, 231, 331 enters between the separation preventing protrusion and the second coupling sleeve 141, 241, 341.
Aspect 15: The secondary battery according to any one of the preceding aspects, wherein the separation preventing protrusion extends in a direction corresponding to the central axis and is provided such that one end portion supports a bottom surface of the current collector 130, wherein the separation preventing protrusion comprises a second fixing protrusion fastened to the bottom surface of the current collector 130, and the second fixing protrusion comprises a third chamfer configured to guide insertion of the first coupling sleeve 131, 231, 331.

The above description is merely an example of applying the principles of the present disclosure, and other configurations may be further comprised without departing from the scope of the present disclosure.

## Claims

1. A secondary battery comprising:
an electrode assembly 120 accommodated inside a can;
a current collector 130 electrically connected to an electrode tab of the electrode assembly 120; and
a rivet 140 fastened to the current collector 130 and functioning as an electrode terminal,
wherein the current collector 130 comprises a first coupling sleeve 131, 231, 331,
the rivet 140 comprises a second coupling sleeve 141, 241, 341 fastened to the first coupling sleeve 131, 231, 331, and
the first coupling sleeve 131, 231, 331 is provided to be inserted into and fastened to the second coupling sleeve 141, 241, 341 in a direction corresponding to a central axis of the electrode assembly 120.

2. The secondary battery of claim 1, wherein the first coupling sleeve 131, 231, 331 is inserted into an inner space of the second coupling sleeve 141, 241, 341 and fastened, and
the second coupling sleeve 141, 241, 341 comprises an inner surface fastened in close contact with an outer surface of the first coupling sleeve 131, 231, 331.

3. The secondary battery according to any one of the preceding claims, wherein the first coupling sleeve 131, 231, 331 interlocks with the second coupling sleeve 141, 241, 341 to restrict separation in a direction of the central axis.

4. The secondary battery according to any one of the preceding claims, wherein the first coupling sleeve 131, 231, 331 comprises a first fixing protrusion,
the second coupling sleeve 141, 241, 341 comprises a fixing groove fastened to the first fixing protrusion, and
the fixing groove is provided to restrict separation of the first fixing protrusion in a direction of the central axis.

5. The secondary battery according to any one of the preceding claims, wherein the first coupling sleeve 131, 231, 331 is formed of an elastic material having electrical conductivity and is provided to be elastically in close contact with the second coupling sleeve 141, 241, 341.

6. The secondary battery according to any one of the preceding claims, wherein the first coupling sleeve 131, 231, 331 is provided to be at least partially bonded to the second coupling sleeve 141, 241, 341 by an electrically conductive adhesive.

7. The secondary battery according to any one of the preceding claims, wherein the second coupling sleeve 141, 241, 341 comprises a first chamfer at one end portion through which the first coupling sleeve 131, 231, 331 enters an inner space.

8. The secondary battery according to any one of the preceding claims, further comprising a gasket 150 fastened between the can and the rivet 140.

9. The secondary battery according to any one of the preceding claims, wherein the gasket 150 comprises:
a first gasket 151 disposed on an inside of the can; and
a second gasket 152 disposed on an outside of the can and fastened to the first gasket.

10. The secondary battery according to any one of the preceding claims, wherein the first gasket 151 is provided with a first gasket coupling portion 151a extending in a direction toward the inside and outside of the can, and
the second gasket 152 is provided with a second gasket coupling portion 152a having a shape corresponding to the first gasket coupling portion 151a and fastened to the first gasket coupling portion 151a.

11. The secondary battery according to any one of the preceding claims, wherein the gasket 151 is provided with an upper surface portion in close contact with the rivet 140 on an outside of the can, and
the first coupling sleeve 131, 231, 331 is fastened to the second coupling sleeve 141, 241, 341 at a predetermined distance above the upper surface portion.

12. The secondary battery according to any one of the preceding claims, wherein the rivet 140 comprises a separation preventing protrusion that radially restrains and supports the first coupling sleeve 131, 231, 331 between the rivet and the second coupling sleeve 141, 241, 341.

13. The secondary battery according to any one of the preceding claims, wherein the separation preventing protrusion is formed to be spaced a predetermined interval apart from an inner surface of the second coupling sleeve 141, 241, 341, and an outer surface is in close contact with an inner surface of the first coupling sleeve 131, 231, 331 to restrain and support the first coupling sleeve 131, 231, 331 in a region comprising an upper end portion of the first coupling sleeve 131, 231, 331.

14. The secondary battery according to any one of the preceding claims, wherein the separation preventing protrusion is provided with a second chamfer at one end portion through which the first coupling sleeve 131, 231, 331 enters between the separation preventing protrusion and the second coupling sleeve 141, 241, 341.

15. The secondary battery according to any one of the preceding claims, wherein the separation preventing protrusion extends in a direction corresponding to the central axis and is provided such that one end portion supports a bottom surface of the current collector 130,
wherein the separation preventing protrusion comprises a second fixing protrusion fastened to the bottom surface of the current collector 130, and
the second fixing protrusion comprises a third chamfer configured to guide insertion of the first coupling sleeve 131, 231, 331.
